# EUROPÄISCHE PATENTSCHRIFT

(11) **EP 1 925 134 B1**
(45) Veröffentlichungstag und Bekanntmachung des Hinweises auf die Patenterteilung: **13.07.2011**
(21) Anmeldenummer: 06792990.1
(22) Anmeldetag: 24.08.2006
(51) Int. Cl.: H04L 12/56

(54) **VERFAHREN ZUR RESERVIERUNG VON BANDBREITE**
METHOD FOR RESERVING BANDWIDTH
PROCEDE POUR LA RESERVATION DE BANDE PASSANTE

(30) Priorität: 16.09.2005 DE 102005044387
(43) Veröffentlichungstag der Anmeldung: 28.05.2008
(73) Patentinhaber: Siemens Enterprise Communications GmbH & Co. KG, 81379 München (DE)
(72) Erfinder: BRANDT, Thomas, 24537 Neumünster (DE); HONOLD, Stefan, 81476 München (DE); MESSNER, Markus, A-2362 Biedermannsdorf (AT); SPAHL, Gerd-Dieter, 82178 Puchheim (DE); SCHWARZ, Maria, A-1230 Wien (AT)
(74) Vertreter: Fritzsche, Thomas
(86) Internationale Anmeldenummer: PCT/EP2006/065651
(87) Internationale Veröffentlichungsnummer: WO 2007/031392

(56) Entgegenhaltungen:
- EP-A- 1 211 851
- US-B1- 6 760 774
- DE-NIAN YANG ET AL: "MQ: An Integrated Mechanism for Multimedia Multicasting" IEEE TRANSACTIONS ON MULTIMEDIA, IEEE SERVICE CENTER, PISCATAWAY, NJ, US, Bd. 3, Nr. 1, März 2001 (2001-03), XP011036240 ISSN: 1520-9210
- LIXIA ZHANG ET AL: "RSVP: A NEW RESOURCE RESERVATION PROTOCOL" IEEE NETWORK, IEEE SERVICE CENTER, NEW YORK, NY, US, Bd. 7, Nr. 5, September 1993 (1993-09), Seiten 8-18, XP000828446 ISSN: 0890-8044

## Beschreibung

Die Erfindung betrifft ein Verfahren und eine Anordnung zur Reservierung von Bandbreite in einem paketorientierten Netzwerk.

In paketorientierten Netzwerken ist eine Planung und Zuweisung von Bandbreite bekannt. Unter dem Begriff Bandbreite ist ein zu erwartender oder tatsächlicher Wert einer zwischen Netzelementen ausgetauschten Datenmenge pro Zeiteinheit zu verstehen.

In paketorientierten Netzwerken wird häufig von einer Reservierung einer Bandbreite zwischen zwei oder mehreren Netzelementen Gebrauch gemacht. Eine solche Bandbreitenreservierung erfolgt z.B. für einen Datenaustausch mit erhöhter Priorität oder für einen Datenaustausch, der eine Echtzeit- oder Quasi-Echtzeitübertragung vorsieht. Letztere Übertragung kommt insbesondere für eine Kommunikation unter Verwendung eines Echtzeitprotokoll RTP (Real Time Protocol), beispielsweise für eine VoIP-Kommunikationsverbindung (Voice over Internet Protocol) zum Einsatz.

Für den Fall, dass ein logischer Verbindungsaufbau zunächst an mehrere alternative Ziel-Netzelemente gerichtet ist, um dann nach einer erfolgreicher Verbindungseinrichtung mit einem der Ziel-Netzelemente eine einzige Verbindung zu diesem zu unterhalten, erweist sich eine herkömmliche Bandbreitenreservierung insofern als ineffizient, da eine Reservierung zunächst zu allen alternativen Ziel-Netzelementen erfolgt. Für einen nicht zu vernachlässigenden Zeitraum werden damit Übertragungskapazitäten im Netzwerk unnötigerweise gebunden. In ähnlicher Weise erweist sich ein von mehreren alternativen Quell-Netzelementen ausgehender Verbindungsaufbau, von welchem nach einer erfolgreicher Verbindungseinrichtung mit einem der Quell-Netzelemente eine einzige Verbindung ausgeht als gleichermaßen ineffizient.

In EP 1 211 851 A 1 ist ein Ressourcenreservierungsverfahren für ein Netzwerk beschrieben, bei dem in einem Netzwerk mit Mehrpunktverbindungen (multicast network) vorhandene Pfadnachrichten vom Sender zum Empfänger und/oder Reservierungsanforderungsnachrichten vom Empfänger zum Sender im Rahmen des Ressourcenreservierungsprotokolls mit Information versehen werden, die für den Netzwerkverkehr charakteristisch sind. Unter Einbezug der zusätzlichen Informationen über den Netzwerkverkehr soll eine Vorreservierung (pre-reservation) von Netzwerkressourcen unnötige Reservierung von Netzwerkressourcen vermeiden, wobei die Ressourcenreservierung abhängig von den Ressourcenanforderungen der Empfänger und für sämtliche Empfänger erfolgt. Vorgenommene Ressourcenreservierungen werden bis zur Versendung einer Fehlernachricht eines Routers an einen Empfänger aufrechterhalten.

Aufgabe der Erfindung ist es, ein verbessertes Verfahren für eine Bandbreitenreservierung bei einer logischen Verbindung von Netzelementen in einem paketorientierten Netzwerk anzugeben.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch eine Anordnung mit den Merkmalen des Patentanspruchs 5.

Das erfindungsgemäße Verfahren zur Reservierung von Bandbreite in einem paketorientierten Netzwerk, bei dem zwischen einer Mehrzahl von Netzelementen eine paketorientierte Kommunikationsbeziehung über mindestens einen Kommunikationszweig aufgebaut wird, sieht in einem ersten Schritt eine Zuweisung einer für die Kommunikationsbeziehung eindeutigen Identifikationsnummer zur Identifikation der zu Kommunikationsbeziehung zugehörigen Kommunikationszweige vor. Weiterhin ist eine Bestimmung eines Bandbreitenwertes für einen jeweiligen Kommunikationszweig vorgesehen, bei dem sich der Bandbreitenwert als Maximum von in diesem Kommunikationszweig von Netzelementen angeforderten Bandbreitenanforderungen ergibt. Schließlich erfolgt einen Reservierung einer Bandbreite im jeweiligen Kommunikationszweig anhand des berechneten Bandbreitenwerts.

Das erfindungsgemäße Verfahren ist von der Idee getragen, Einzel-Reservierungen von Bandbreiten zu ersetzen durch eine abschnittsweise bzw. kommunikationszweig-weise Reservierung mit dem Ziel, in den einzelnen Kommunikationszweigen eine Bandbreite für die aus mehreren alternativen Verbindungsaufbauversuchen schließlich tatsächlich zustande gekommene Verbindung zu reservieren.

Die erfindungsgemäße Lösung setzt - statt einer bekannten Zuweisung einer jeweiligen Identifikationsnummer für einen jeweiligen Verbindungsaufbau - auf eine Vergabe einer für alle zur Kommunikationsbeziehung gehörigen Verbindungsaufbauten eindeutigen Identifikationsnummer. Eine diese Identifikationsnummer auswertende Bandbreitenverwaltung ist damit in der Lage, eine Mehrfachreservierung in einzelnen Kommunikationszweigen zu verhindern.

Ein Kommunikationszweig ist dabei eine gedachte logische Verbindung zwischen zwei Netzelementen bzw. zwischen einem Netzelement und einem Netzknoten in dem ansonsten verbindungslos zu sehenden paketorientiertem Netzwerk.

Die Bandbreitenverwaltung prüft auf jedem Kommunikationszweig entlang der einzurichtenden Kommunikationsbeziehung, ob bereits Bandbreitenreservierungen mit einer gegebenen Identifikationsnummer vorhanden sind. Stimmt eine zu überprüfende Identifikationsnummer mit einer gegebenen Identifikationsnummer überein, erfolgt keine neue Reservierung von Bandbreite, stattdessen wird eine bestehende Bandbreitenreservierung bestätigt oder auf einen höheren Bandbreitenbedarf korrigiert.

Verlaufen also für eine einzurichtende Kommunikationsbeziehung mehrere Verbindungsaufbauten über einen gemeinsamen Kommunikationszweig, wird statt einer vormals bekannten Einzel-Reservierung der Höchstwert bzw. Maximum an angeforderter Bandbreite der einzelnen Verbindungsaufbauten bestimmt und in diesem Kommunikationszweig die angeforderte Bandbreite nach diesem Höchstwert eingestellt.

Ein wesentlicher Vorteil des erfindungsgemäßen Verfahrens ist darin zu sehen, dass mit dessen Einsatz ein effektiveres Netzwerkmanagement mit einem geringeren Verbrauch an Netzwerkressourcen ermöglicht wird.

Vorteilhafte Weiterbildungen der Erfindung sind in den Unteransprüchen angegeben.

Ein Ausführungsbeispiel mit weiteren Vorteilen und Ausgestaltungen der Erfindung wird im Folgenden anhand der Zeichnung näher erläutert.

Dabei zeigen:
- Figur 1:: Ein Strukturbild zur schematischen Darstellung ei- nes Kommunikationsbeziehungsaufbaus mit einer Mehr- zahl gerufener Netzelemente,
- Figur2:: Ein Strukturbild zur schematischen Darstellung ei- nes Kommunikationsbeziehungsaufbaus mit einer Mehr- zahl von rufenden und gerufenen Netzelementen.

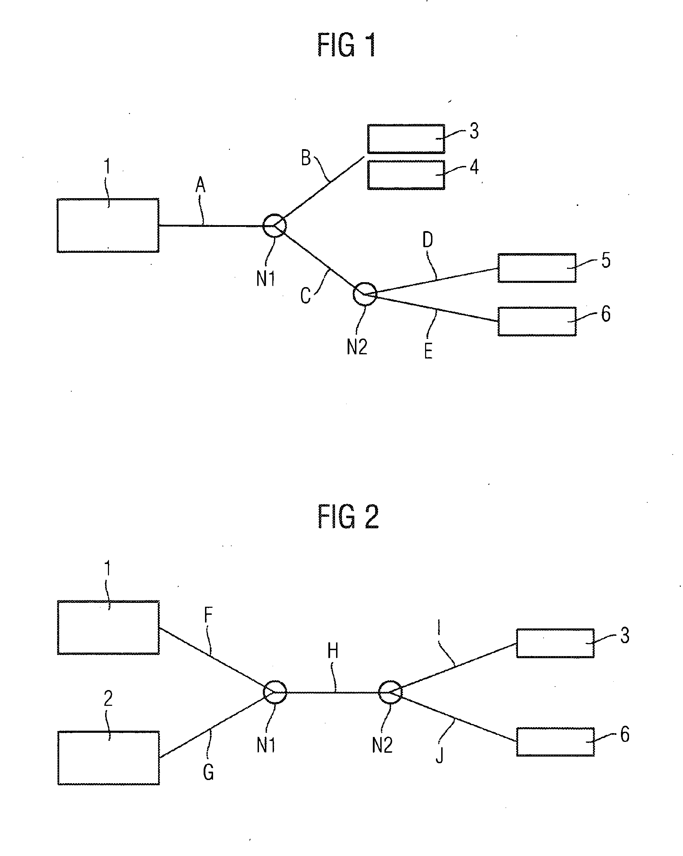

Figur 1 zeigt einen Ausschnitt aus einem paketorientiertem Netzwerk. Bestandteile dieses paketorientierten Netzwerkes sind ein erstes Netzelement 1, ein drittes Netzelement 3, ein viertes Netzelement 4, ein fünftes Netzelement 5, ein sechstes Netzelement 6, ein erstes Knotenelement N1 sowie ein zweites Knotenelement N2.

Die vorgenannten Funktionseinheiten sind teilweise mit Kommunikationszweigen, A,B,C,D,E miteinander verbunden. Diese Kommunikationszweige A,B,C,D,E sind einer aufzubauenden Kommunikationsbeziehung, ausgehend vom rufenden ersten Netzelement 1, zuzuordnen. Unter einem »rufenden« Netzelement ist dabei zunächst allgemein ein eine Kommunikationsbeziehung i-nitiierendes Netzelement zu verstehen. In einem später erläuterten Ausführungsbeispiel der Erfindung - mit einer Verwendung von paketorientierten Kommunikationsendgeräten bzw. VoIP-Endgeräten - ist das rufende Netzelement im Sinne der fernmeldetechnischen Terminologie als Ursprung einer aufzubauenden Echtzeitkommunikation wie z.B. einer Sprach-, Videoverbindung usw. zu verstehen.

Ein erster Kommunikationszweig A befindet sich zwischen dem rufenden Netzelement 1 und dem ersten Knotenelement N1. Ein zweiter Kommunikationszweig B befindet sich zwischen dem ersten Knotenelement N1 und dem dritten bzw. vierten Netzelement 3,4. Ein dritter Kommunikationszweig C befindet sich zwischen dem ersten und dem zweiten Knotenelement N1, N2. Ein vierter Kommunikationszweig D befindet sich zwischen dem zweiten Knotenelement N2 und dem fünften Netzelement 5. Ein fünfter Kommunikationszweig E befindet sich zwischen dem zweiten Knotenelement N2 und dem sechsten Netzelement 6.

Vorgenannte Kommunikationszweige sind als »logische« Verbindungen, d.h. oberhalb einer logischen Verbindungsschicht eines Netzwerkprotokollstacks zu sehen. Die Verbindungszweige A,B,C,D,E gehören zu ein und derselben Kommunikationsbeziehung, welche vom rufenden Netzelement 1 ausgeht und tragen daher alle die gleiche Identifikationsnummer.

Eine Situation, in der ein rufendes Netzelement zunächst mehrere Netzelemente, 3,4,5,6 als Ziel ruft und bei erfolgreichem Verbindungsaufbau fortan mit einem der Netzelemente 3,4,5,6 ausschließlich kommuniziert, tritt z.B. bei einem sogenannten »Sammelruf« auf. Bei dem vorgenannten Leistungsmerkmal ruft ein rufendes VoIP-Kommunikationsendgerät 1 eine aus den Endgeräten 3,4,5,6 bestehende Anrufübernahmegruppe. Nach Entgegennahme des Gesprächs an einem der Endgeräte 3,4,5,6 wird die Kommunikationsverbindung zwischen diesem und dem rufenden Endgerät 1 aufgebaut, während die jeweils übrigen Kommunikationszweige A,B,C,D,E wieder freigegeben werden.

In der vorgenannten beispielhaften Ausgestaltung der Netzelemente 1,3,4,5,6 als VoiP-Kommunikationsendgeräte 1,3,4,5,6 nehmen die Knotenelemente N1, N2 beispielsweise die Funktion eines Kommunikationssystems N1, N2 ein. Das Kommunikationssystem kann dabei eine klassische TDM-Vermittlungstechnik (Time Division Multiplex) mit einer Anbindung an das paketorientierte Netzwerk über Gateways aufweisen, vermittlungstechnisch rein paketorientiert arbeiten (beispielsweise unter Verwendung des Protokolls SIP, Session Initiation Protocol) oder auch als Mischform der letztgenannten Ausführungsformen vorliegen. Eine solche Mischform wird oftmals auch als »konvergentes« Kommunikationssystem bezeichnet.

Das erste Kommunikationssystem N1 veranlasst - im Falle eines gehenden Rufes durch das vom Kommunikationssystem N1 gesteuerten Endgerät 1 - eine Bandbreitenreservierungsanforderung für die dargestellten Kommunikationszweige A,B,C,D,E, welche neben einer identischen Identifikationsnummer eine Angabe der Quelle, des Ziels sowie entsprechender Bandbreitenanforderungen enthalten.

Eine - nicht dargestellte - Bandbreitenverwaltung reserviert unter Anwendung des erfindungsgemäßen Verfahrens eine Bandbreite in den einzelnen Kommunikationszweigen A,B,C,D,E gemäß der folgenden Maßgaben:

| | |
|---|---|
| - Erster Kommunikationszweig A: | MAX [BW(3), BW(4),BW(5), BW(6)] |
| - Zweiter Kommunikationszweig B: | MAX [BW(3), BW(4)] |
| - Dritter Kommunikationszweig C: | MAX [BW(5), BW(6)] |
| - Vierter Kommunikationszweig D: | BW(5) |
| - Fünfter Kommunikationszweig E: | BW(6) |

Dabei bedeutet das Formelzeichen MAX das Maximum der zwischen eckigen Klammer stehenden Argumente. Das Argument BW(*) bedeutet eine Bandbreitenanforderung des in der Klammer stehenden Arguments * wobei * eine das jeweilige Netzelement bezeichnende Nummer ist, welche mit dem Bezugszeichen der Netzelemente 1,3,4,5,6 übereinstimmen. Für den vierten und fünften Kommunikationszweig D,E existiert für die hier gegebene Topologie aus Kommunikationszweigen keine Berechnungsvorschrift eines Maximums, da hier jeweils nur eine Bandbreite BW(5),BW(5) zum fünften bzw. sechsten Netzelement reserviert werden muss. Hier gilt also MAX[BW(5)] = BW(5) bzw. MAX[BW(6)] = BW(6).

Für den Fall, dass bestimmte Reservierungsanforderungen aufgrund von Engpässen im paketorientiertem Netzwerk oder aufgrund anderer Gründe abgelehnt werden, gibt es folgende Möglichkeiten gemäß folgender Ausgestaltungen der Erfindung.

Eine fehlgeschlagene Bandbreitenreservierung, welche anhand einer Rückmeldung signalisiert wurde, wird zum Anlass genommen, um ein zugehöriges Ziel-Netzelement 3,4,5,6 aus einer Zielliste zu entfernen und den an diesem Netzelement eingehenden Anruf nicht zu signalisieren.

Alternativ wird der eingehende Anruf am betroffenen Ziel-Netzelement 3,4,5,6 signalisiert mit einer auf einer Ausgabeeinheit ausgegebenen Meldung, welche den Teilnehmer einen Hinweis auf ein bestehendes Bandbreitenproblem gibt. Alternativ oder zusätzlich erfolgt bei Annahme des eintreffenden Anrufs mit vormals erfolgloser Bandbreitenreservierung ein weiterer Bandbreitenreservierungsversuch.

Eine Entgegennahme eines eintreffenden Anrufs an einer Anrufübernahmegruppe, beispielsweise am fünften Endgerät 5, bewirkt eine Freigabe aller nicht beteiligten Kommunikationszweige B,E an der nun erfolgreich »durchgeschalteten« Verbindung über die Kommunikationszweige A,C,D zum fünften Endgerät 5. Die den freigegebenen Kommunikationszweigen B,E zugeordneten Bandbreitenreservierungen werden freigegeben. Damit ist genau die benötigte Bandbreite für die bestehende Verbindung reserviert.

Figur 2 zeigt eine Variante einer analog zu Figur 1 zustande gekommenen Topologie von Kommunikationszweigen, bei der auf rufender Seite ein zweites Netzelement 2 hinzutritt und auf gerufener Seite nur das dritte und das sechste Netzelement in die Kommunikationsbeziehung eingebunden ist.

Eine solche Kommunikationsbeziehung tritt z.B. dann ein, wenn versucht wird, einen von rufenden Netzelementen 1,2 ausgehenden Ruf über mehrere Wege zu einem Ziel in Gestalt der Netzelemente 3,6 zu schalten.

Rufende Netzelemente 1,2 können dabei Teilnehmern zugeordnet sein, welche gleichzeitig auf einen von der Anrufübernahmegruppe bestehend aus den Netzelementen 3,6 angebotenen Dienst zugreifen.

Alternativ sind das erste und das zweite Netzelement 1,2 als Knotenelemente bzw. Pfadpunkte zu interpretieren, welche in einem - nicht dargestellten - links von den Netzelementen 1,2 liegenden Bereich mit weiteren - nicht dargestellten - Netzelementen bzw. Knotenelementen verbunden sind.

Auch in diesem Ausführungsbeispiel gemäß Figur 2 ist wesentlich, eine identische Identifikationsnummer für die aufzubauende Kommunikationsbeziehung in den einzelnen Kommunikationszweigen F,G,H,I,J zu verwenden.

## Patentansprüche

1. Verfahren zur Reservierung von Bandbreite in einem paketorientierten Netzwerk, bei dem zwischen einer Mehrzahl von Netzelementen (1, 2, 3, 4, 5, 6) eine paketorientierte Kommunikationsbeziehung über mindestens einen Kommunikationszweig (A, B, C, D, E, F, G, H, I, J) aufgebaut wird, wobei zu der Kommunikationsbeziehung mehrere Verbindungsaufbauten zugehörig sind und nach erfolgreicher Verbindungseinrichtung eine einzige Verbindung unterhalten wird, mit folgenden Schritten:
a) Zuweisen einer für die Kommunikationsbeziehung eindeutigen Identifikationsnummer zur Identifikation der zur Kommunikationsbeziehung zugehörigen Kommunikationszweige (A, B, C, D, E, F, G, H, I, J),
wobei für die Konununikationsbeziehung mehrere Verbindungsaufbauten über einen gemeinsamen Kommunikationszweig (A, B, C, F, G, H) verlaufen,
b) Überprüfung eines jeweiligen Kommunikationszweiges (A, B, C, D, E, F, G, H, I, J) der Kommunikationsbeziehung auf mit der besagten Identifikationsnummer von Netzelementen (1, 2, 3, 4, 5, 6) angeforderte Bandbreitenanforderungen (BW) und Bestimmung eines Bandbreitenwerts für den gemeinsamen Kommunikationszweig (A, B, C, F, G, H) als Maximum (MAX) von in diesem Kommunikationszweig angeforderten Bandbreitenanforderungen (BW) der einzelnen Verbindungsaufbauten,
b0) Zustandekommen der Verbindung aus mehreren alternativen Verbindungsaufbauversuchen,
b1) Freigabe von Bandbreitenanforderungen (BW) in nicht an der Verbindung beteiligten Kommunikationszweigen (B, C, D, E, F, G, I, J),
c) Reservierung einer Bandbreite im jeweiligen Kommunikationszweig (A, B, C, D, E, F, G, H, I, J) anhand des Bandbreitenwerts.

2. Verfahren nach Anspruch 1,
**dadurch gekennzeichnet,**
**dass** die Kommunikationszweige (A, B, C, D, E, F, G, H, I, J) zwischen den Netzelementen (1, 2, 3, 4, 5, 6) über mindestens einen Netzknoten (N1, N2) verlaufen.

3. Verfahren nach einem der Ansprüche 1 bis 2,
**dadurch gekennzeichnet,**
**dass** die Bandbreitenanforderungen (BW) von mindestens einem rufenden Netzelement (1, 2) ausgehen.

4. Verfahren nach einem der Ansprüche 1 bis 2,
**dadurch gekennzeichnet,**
**dass** die Bandbreitenanforderungen (BW) von einem Kommunikationssystem (N1, N2) seitens des mindestens einen rufenden Netzelement (1, 2) ausgehen.

5. Bandbreitenverwaltungssystem mit Mitteln, welche adaptiert sind, um die Ausführung aller Schritte des Verfahrens nach einem der Ansprüche 1 bis 4, durchzuführen.

## Claims

1. Method for reserving bandwidth in a packet-switched network in which a packet-switched communication relationship is created between a multiplicity of network elements (1, 2, 3, 4, 5, 6) via at least one communication branch (A, B, C, D, E, F, G, H, I, J), wherein several connection structures belong to the communication relationship and after successful establishment of the connection a single connection is maintained, with the following steps:
a) allocation of a unique identification number for the communication relationship to identify the communication branches (A, B, C, D, E, F, G, H, I, J) belonging to the communication relationship, wherein several connection structures for the communication relationship run via a common communication branch (A, B, C, D, E, F, G, H),
b) testing of a communication branch (A, B, C, D, E, F, G, H, I, J) of the communication relationship for bandwidth requirements (BW) requested by network elements (1, 2, 3, 4, 5, 6) with said identification number and determination of a bandwidth for the common communication branch (A, B, C, F, G, H) as a maximum (MAX) of bandwidth requirements (BW) requested in this communication branch for the individual connection structures,
b0) creation of the connection from several alternative connection creation attempts,
b1) release of bandwidth requirements (BW) in communication branches (B, C, D, E, F, G, I, J) not involved in the connection,
c) reservation of a bandwidth in the communication branch concerned (A, B, C, D, E, F, G, H, I, J) using the bandwidth value.

2. Method according to claim 1, **characterised in that** the communication branches (A, B, C, D, E, F, G, H, I, J) run between the network elements (1, 2, 3, 4, 5, 6) via at least one network node (N1, N2).

3. Method according to any of claims 1 to 2, **characterised in that** the bandwidth requests (BW) originate from at least one calling network element (1, 2).

4. Method according to any of claims 1 to 2, **characterised in that** the bandwidth requests (BW) originate from a communication system (N1, N2) from at least one calling network element (1, 2).

5. Bandwidth administration system with means which are adapted to perform all steps of the method according to any of claims 1 to 4.

## Revendications

1. Procédé pour la réservation de largeur de bande dans un réseau orienté paquets, dans lequel une relation de communication orientée paquets est établie par le biais d'au moins une branche de communication (A, B, C, D, E, F, G, H, I, J) entre une pluralité d'éléments de réseau (1, 2, 3, 4, 5, 6), plusieurs établissements de liaison correspondant à la relation de communication et une seule liaison étant entretenue après l'établissement réussi de la liaison,
comportant les étapes suivantes consistant à :
a) attribuer un numéro d'identification, univoque pour la relation de communication, à des fins d'identification des branches de communication (A, B, C, D, E, F, G, H, I, J) correspondant à la relation de communication, plusieurs établissements de liaison pour la relation de communication passant par une branche de communication commune (A, B, C, F, G, H),
b) pour une branche de communication respective (A, B, C, D, E, F, G, H, I, J) de la relation de communication, vérifier ledit numéro d'identification des demandes de largeur de bande (BW) émises par des éléments de réseau (1, 2, 3, 4, 5, 6) et déterminer une valeur de largeur de bande pour la branche de communication commune (A, B, C, F, G, H) en tant que maximum (MAX) pour les demandes de largeur de bande (BW) des différents établissements de liaison émises dans cette branche de communication,
b0) réaliser la liaison à partir de plusieurs essais différents d'établissements de liaison,
b1) libérer les demandes de largeur de bande (BW) dans des branches de communication (B, C, D, E, F, G, I, J) ne participant pas à la liaison,
c) réserver une largeur de bande dans la branche de communication respective (A, B, C, D, E, F, G, H, I, J) à l'aide de la valeur de largeur de bande.

2. Procédé selon la revendication 1,
**caractérisé en ce**
**que** les branches de communication (A, B, C, D, E, F, G, H, I, J) entre des éléments de réseau (1, 2, 3, 4, 5, 6) passent par au moins un noeud de réseau (N1, N2).

3. Procédé selon une des revendications 1 à 2,
**caractérisé en ce**
**que** les demandes de largeur de bande (BW) sont émises par au moins un élément de réseau appelant (1, 2).

4. Procédé selon une des revendications 1 à 2,
**caractérisé en ce**
**que** les demandes de largeur de bande (BW) sont émises par un système de communication (N1, N2) situé du côté de l'au moins un élément de réseau appelant (1, 2).

5. Système de gestion de largeur de bande doté de moyens qui sont adaptés pour exécuter toutes les étapes du procédé selon une des revendications 1 à 4.
